# EUROPEAN PATENT APPLICATION

(11) **EP 4 151 350 A1**
(43) Date of publication of application: **22.03.2023**
(21) Application number: 21020465.7
(22) Date of filing: 16.09.2021
(51) Int. Cl.: B23K 9/16, B23K 9/29, B23K 9/32

(54) **TRAILING GAS NOZZLE WITH INTEGRATED COOLING**

(71) Applicant: Linde GmbH, 82049 Pullach (DE)
(72) Inventor: Siewert, Erwan, 82049 Pullach (DE); Pfreuntner, Michael, 82049 Pullach (DE)
(74) Representative: Lu, Jing

(57) **Abstract**

The present invention relates to a gas shielding apparatus (1) for a welding torch (100), comprising: an elongated body (10) comprising an internal space (12) for receiving a shielding gas (S), and an elongated discharge area (11) on a bottom side of the body (10) for discharging the shielding gas (S) onto a weld seam (2a), and a plurality of gas distributors (13) arranged in the internal space (12), each gas distributor (13) being configured to distribute the shielding gas (S) into the internal space (12) so that the shielding gas (S) is discharged out of the gas shielding apparatus (1) through said discharge area (11). According to the present invention, the gas shielding apparatus (1) further comprises a plurality of separate cooling nozzles (20) arranged in the internal space (12), each cooling nozzle (20) being configured to discharge a cooling medium (C) onto the weld seam (2a).

## Description

The present invention relates to a gas shielding apparatus for a welding torch that allows to cover an elongated section of a weld seam that has just being welded with a shielding gas. Furthermore, the present invention relates to a method for shielding and cooling a component upon welding, particularly cladding or additive manufacturing (e.g. wire arc additive manufacturing (WAAM)).

Such apparatuses are also denoted as trailing nozzles, since they follow the arc or weld pool in the welding direction. Particularly, US5393949A and WO2018073293A2 disclose such trailing nozzles

According to the current state of the art, shielding gas trailing nozzles are manufactured for each welding task individually. The sole purpose of trailing nozzles is to protect the molten pool and the still hot surface of the component from reacting with the ambient air.

In some cases, welding is performed on bath supports, and in some cases, these are cooled. Often, however, bath rails cannot be used, e.g., because of accessibility problems or due to economic factors. Bath supports extract heat from the component through direct contact. The heat extraction depends on the contact surface, the contact pressure between the component and the rail and the temperature difference. If a rail is not actively cooled, it heats up continuously, so that the heat dissipation changes from component to component. If the rail is cooled differences in heat dissipation due to different contact conditions can occur. If a component is welded without a bath rail, it heats up strongly. Particularly, heating of the component is particularly critical with WAAM (Wire Arc Additive Manufacturing), since a large number of welding layers are applied. As described above, trailing nozzles are currently used to prevent oxidation of the still hot surface. To a certain extent, the length of the cooling time can be utilized, so that the still hot surface has fallen below a critical temperature and oxidation no longer occurs. Under conditions where the component does not cool down or hardly cools down at all, or the temperature even increases, it is no longer sensible to further increase the length of the trailing gas nozzle, since the component will always be above a critical temperature at which oxidation occurs. The critical temperature depends on the material. Oxidation results in visual impairment (tarnish), loss of the corrosion properties, hardening and, in the worst case, destruction of the material composition. The negative consequences described above must be eliminated in time-consuming and cost-intensive subsequent steps, such as brushing, chemical pickling or grinding. Different temperatures also lead to a change in the weld seam formation.

Summarizing, trailing gas nozzles cannot operate effectively if the component surface temperature is too high when it leaves the protective area of the trailing gas nozzle. The temperature of the component surface varies over the welded section, depending on the temperature of the environment and the contact surfaces. Eliminating oxidation of the component surface causes a tremendous economic cost.

Based on the above, the problem to be solved by the present invention is to provide a gas shielding apparatus and a method for shielding and cooling a component upon welding that are improved regarding the above-stated difficulties.

This problem is solved by a gas shielding apparatus having the features of claim 1 and by a method having the features of claim 14. Preferred embodiments of these aspects of the present invention are stated in the corresponding dependent claims and are described below.

According to claim 1, a gas shielding apparatus for a welding torch is disclosed, the gas shielding apparatus comprising:
- an elongated body comprising an internal space for receiving a shielding gas, and an elongated discharge area on a bottom side of the body for discharging the shielding gas onto a weld seam, and
- a plurality of gas distributors arranged in the internal space; each gas distributor being configured to distribute the shielding gas into the internal space so that the shielding gas is discharged out of the gas shielding apparatus through said discharge area.

According to the present invention, the gas shielding apparatus comprises a plurality of separate cooling nozzles arranged in the internal space, each cooling nozzle being configured to discharge a cooling medium onto a component to be welded. Particularly, the component can be welded using any suitable welding process, including also cladding or additive manufacturing (such as WAAM).

Particularly, the cooling medium is supplied as a fluid cooling medium, particularly a cooling liquid (e.g. a cryogen), particularly liquid CO₂, and passed to the respective cooling nozzle as a liquid. Upon discharging the cooling medium out of the respective cooling nozzle, the cooling medium can evaporate. Particularly, in case of CO₂, a mixture out of CO₂ snow and cold CO₂ gas can be discharged out of the respective cooling nozzle.

Particularly, the cooling medium is discharged into the internal space by the cooling nozzles so that the cooling medium is discharged through the discharge area of the body onto the component to be cooled. The discharge area can be formed by a mesh or a wall structure comprising a plurality of openings allowing the shielding gas and cooling medium (e.g. gas) to pass through the discharge area. Particularly, the discharge area can be formed by a metallic mesh or a perforated plate.

According to a preferred embodiment of the gas shielding apparatus, the respective gas distributor comprises a porous material like metallic foams or sintered materials made out of e.g. stainless steel, brass or bronze, particularly in combination with a metallic mesh or perforated sheet made out of stainless steel or aluminium at an outlet of the respective gas distributor.

According to an embodiment, the discharge area extends along a longitudinal direction, wherein the gas shielding apparatus is configured to discharge a shielding gas with a flow rate in the range from 0,5 I/min to 2 l/min per 100 mm² of area of the discharge area.

Furthermore, in an embodiment, the shielding gas apparatus is configured such that a flow rate of the cooling medium per unit area of the discharge area is several times higher than a flow rate of the shielding gas per unit area of the discharge area.

Furthermore, according to an embodiment, the cooling nozzles are distributed along the body in the internal space in a non-uniform manner.

Further, in an embodiment, the gas shielding apparatus is configured to be connected to a welding torch at a first end of the body, wherein one of the cooling nozzles comprises a minimal distance to the welding torch when the welding torch is connected to the first end of the body, said minimal distance being larger than a distance between each two neighbouring cooling nozzles. particularly so that an interaction with cooling medium discharged from a cooling nozzle and an arc generated by the welding torch is avoided.

According to a further embodiment of the gas shielding apparatus, the gas shielding apparatus is configured to allow adjusting of a flow rate of the cooling medium discharged through each cooling nozzle separately, particularly by means of a valve arranged upstream each cooling nozzle.

Furthermore, in an embodiment, the gas shielding apparatus is configured to supplying the cooling nozzles uniformly with the cooling medium (e.g., via a gas distributor).

According to a further embodiment, the gas shielding apparatus is configured to vary a composition of cooling medium supplied to the respective cooling nozzle individually. Particularly, this can be achieved by connecting each cooling nozzle (e.g., via the respective valve) to a separate cooling medium source providing a cooling medium of a certain defined composition. Particularly, each cooling nozzle can be supplied with a cooling medium comprising a composition being different from the cooling medium supplied to at least one other cooling nozzle.

Furthermore, in an embodiment, the gas shielding apparatus is configured to supply a cooling medium to the respective cooling nozzle, the respective cooling medium comprising at least one of: argon, helium, nitrogen, hydrogen, carbon dioxide (CO₂).

Further, in an embodiment, the gas shielding apparatus comprises a temperature sensor configured to measure a temperature of a component being covered with the shielding and cooling medium by the gas shielding apparatus, particularly upon welding the component with the welding torch. Particularly, the temperature sensor is arranged at a second end of the body opposite the first end.

Furthermore, in an embodiment, the temperature sensor comprises one of: a thermocouple, a pyrometer, a thermal camera.

According to a further embodiment, the gas shielding apparatus further comprises a control unit configured to control a flow rate of the cooling medium discharged through the respective cooling nozzle and/or a number of active cooling nozzles, so that said temperature is below a predefined critical temperature or can be decreased below a said critical temperature.

Furthermore, according to an embodiment, the critical temperature can be set in a computer program executed by a processor of the gas shielding apparatus (particularly a processor of the control unit). Particularly, the control unit is configured to issue an alarm in case the critical temperature is exceeded, particularly although the cooling medium flow rate has already been increased and said number of active cooling nozzles has been increased.

Further, in an embodiment, the cooling nozzles are configured to be releasably fastened to the body, so that the number of cooling nozzles fastened to the body can be changed and/or so that a cooling nozzle can be replaced by a cooling nozzle having a different specification.

Further, according to an embodiment, the discharge area is formed by one of: a gas permeable material layer, a metallic mesh, a perforated plate, a porous material layer, or by a combination of these elements, wherein preferably the discharge area covers the internal space towards the component / workpiece to be welded and/or cooled. Particularly, in an embodiment, the respective cooling nozzle protrudes out of the internal space through a corresponding opening formed in the discharge area. However, instead of a material layer, the discharge area can also a mere opening through which shielding gas is discharged out of the body.

According to yet another aspect of the present invention, a method for gas shielding and cooling a component upon welding is disclosed, the method comprising the steps of:
- Connecting a gas shielding apparatus according to one of the preceding claims to a welding torch, and
- discharging a cooling medium through at least one of the cooling nozzles onto the component for cooling the component.

According to an embodiment of the method the component is cooled by discharging the cooling medium (e.g. gas) upon welding the component.

According to an alternative embodiment, the component is welded and cooled by discharging the cooling medium onto the component in an alternating manner. Particularly, the step of welding and cooling the component in an alternating fashion comprises welding the component using the welding torch and discharging a shielding gas through the gas distributors onto the component, stopping the welding and discharging the cooling medium onto a previous welding path.

According to an embodiment of the method, the flow rate of the cooling medium through the at least one cooling nozzle is controlled so as to decrease or maintain a temperature of the component below a pre-defined critical temperature.

According to an embodiment of the method, the method comprises discharging a cooling medium (e.g. gas) through the cooling nozzles onto the component for cooling the component, wherein particularly a flow rate of the cooling medium through the respective cooling nozzle is controlled and/or the number of active cooling nozzles is controlled (e.g., increased, maintained or decreased), so as to decrease or maintain a temperature of the component below a pre-defined critical temperature.

According to a further embodiment of the method, a composition of the cooling medium discharged through the at least one cooling nozzle or through the respective cooling nozzle is changed.

In the following, embodiments of the present invention as well as further features and advantages of the present invention are described with reference to the Figure, wherein:

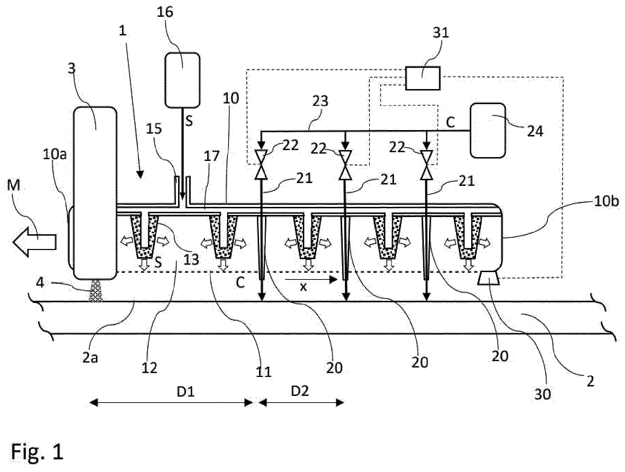

- Fig. 1: shows an embodiment of a gas shielding apparatus according to the present invention.

Fig. 1 shows an embodiment of a gas shielding apparatus 1 according to the present invention, comprising an elongated body 10 comprising an internal space 12 for receiving a shielding gas S, and an elongated discharge area 11 on a bottom side of the body 10 for discharging the shielding gas S onto a weld seam 2a. The apparatus 1 further comprises a plurality of gas distributors 13 arranged in the internal space, each gas distributor being configured to distribute the shielding gas S into the internal space 12 so that the shielding gas S is eventually discharged out of the gas shielding apparatus 1 through said discharge area 12. The shielding gas S can be passed from a shielding gas source 16 to the body 10 via a gas line connectable to a port 15 arranged on the body 10, wherein the body 10 can comprise an internal channel 17 for distributing the shielding gas S to the respective gas distributor 13. The apparatus 1 can be attached to a welding torch 3 at a first end 10a of said body, so that the body 10 follows the welding torch upon welding component 2 in the welding direction M.

Furthermore, in addition to the gas distributors 13, the gas shielding apparatus 1 comprises a plurality of separate cooling nozzles 20 arranged in the internal space 12, each cooling nozzle 20 being configured to discharge a cooling medium C onto the component 2/weld seam 2a being welded to cool the component 2/weld seam 2a.

Preferably, the apparatus 1 is connected to a welding torch 3 and aligned in such a way that the body 10 is located above the molten pool 2a and the hot component's 2 surface. Preferably, the gas flow of the shielding gas S can be further homogenized via porous material at the respective outlet of the distributor 13.

Particularly, for each 100 mm² area of the body's 10 discharge area 11, a gas flow of 0.5 to 2 I/min shielding gas is preferably used. Due to the gas distributors 13 described above, this gas flow emerges homogeneously over the discharge area 11 of the apparatus 1. In addition, there are the separate cooling nozzles 20 arranged in the internal space 12 of the body 10 of the apparatus 1. These cooling nozzles 20 are directed at the hot surface of the component 2 and extract the heat generated by the welding process. The cooling nozzles 20 may also create an overpressure in the internal space 12 of the body 10 and in the volume between the body 10 and the component 2, so that gas protection from atmospheric gases is optimized. Since there is an inert atmosphere around the cooling nozzles 20 created by the gas distributors 13 of the apparatus 1, only inert gas is drawn in by the cooling nozzles 20. In the case of nozzles which are used "in free space", atmospheric gases are sucked in (entrainment of gas due to the Venturi effect). This disadvantage is avoided by the present invention.

The flow rate of cooling medium C per unit area of the discharge area 11 is several times higher than that of the protective gas distributors 13, so that smaller surfaces of the component are selectively exposed to the air and thus cooled. In addition, the cooling nozzles 20 are not evenly distributed along the length of the body 10 in the longitudinal direction x. Thus, there are no cooling nozzles in the immediate vicinity of the arc 4 generated by the torch, so that interaction with the arc 4 is avoided. Particularly a distance D1 between the torch and the closest cooling nozzle 20 is larger than the spacing D2 between each two neighbouring cooling nozzles 20.

Each cooling nozzle 20 can be controlled separately or supplied with cooling medium in fluid form (e.g., as liquid, gas or mixture thereof) uniformly by a distributor. If the cooling nozzles 20 are controlled separately (as shown in Fig. 1), the flow rate of cooling medium through each cooling nozzle 20 can be varied individually. For this, a cooling medium source 24 can be connected via a gas line 23 to the cooling nozzles via valves 22 which in turn are connected to the cooling nozzles via gas lines 21. It is also possible to provide each valve 22 with a cooling medium having an individual composition (e.g., by using several cooling medium sources 24). Thus, also the composition of the cooling medium can be varied and may differ from nozzle 20 to nozzle 20. Particularly, the gases/media used as shielding gas S and/or cooling medium C are argon, helium, nitrogen, hydrogen and their mixtures. Particularly, the cooling nozzles can also be supplied with liquid CO₂. Particularly, each embodiment of the present invention can be used with a cooling medium C being a cooling gas or a cooling medium (such as CO₂) being e.g. supplied as a liquid (which then evaporates and may be discharged as a gas / snow mixture).

Furthermore, as shown in Fig. 1, the discharge area 11 can be formed by a metallic mesh 11 or a perforated plate 11 (particularly a perforated metallic plate) or a porous material layer closing the internal space 12. The discharge area 11 can also be formed by each possible combination of two or more of these components 11. Furthermore, preferably each cooling nozzles 20 protrudes out of the internal space 12, through a corresponding opening in the discharge area 11 (e.g. metallic mesh or perforated plate).

The temperature of the component 2 can be measured at the second end 10b of the body (i.e., opposite a first end 10a of the body 10 at which the torch 3 is connectable to the apparatus 1) by a temperature sensor, e.g., by contact, e.g., by a thermocouple, or by a non-contact measurement, e.g., by a pyrometer or a thermal camera.

A control unit 31 of the apparatus 1 being connected to the temperature sensor 30 can further be used to adjust the cooling medium flow rate (e.g., through the respective valve 22) and / or the number of active cooling nozzles being used, until the measured temperature of the component is below a pre-defined critical temperature.

The critical temperature can be set in a software of the control unit 31. Particularly, an alarm can be issued if the critical temperature is exceeded, although the cooling medium flow rate has already been increased and the number of nozzles 20 has been increased.

Furthermore, preferably, the cooling nozzles 20 can be released from the body, so that the number of nozzles 20 can be adjusted to the welding task and the characteristics of the respective nozzle 20 can be specifically selected.

The gas shielding apparatus according to the present invention allows to achieving an optimal gas coverage as well as a reduction of the surface temperature at the end of the apparatus below a critical value. Furthermore, the component surface and properties are not disturbed and an alignment of the cooling with respect to the still hot surface of the component can be maintained. The disadvantage of cooling nozzles that cause turbulences in "free space" and thus tend to direct contaminated ambient air to the still hot surfaces is avoided.

## Claims

1. A gas shielding apparatus (1) for a welding torch (100), comprising:
- an elongated body (10) comprising an internal space (12) for receiving a shielding gas (S), and an elongated discharge area (11) on a bottom side of the body (10) for discharging the shielding gas (S) onto a weld seam (2a),
- a plurality of gas distributors (13) arranged in the internal space (12), each gas distributor (13) being configured to distribute the shielding gas (S) into the internal space (12) so that the shielding gas (S) is discharged out of the gas shielding apparatus (1) through said discharge area (11),
**characterized in that**
the gas shielding apparatus (1) further comprises a plurality of separate cooling nozzles (20) arranged in the internal space (12) each cooling nozzle (20) being configured to discharge a cooling medium (C) for cooling a component (2) to be welded.

2. The gas shielding apparatus according to claim 1, wherein the respective gas distributor (13) comprises a porous material at an outlet of the respective gas distributor (13).

3. The gas shielding apparatus according to claim 2, wherein the discharge area (11) extends along a longitudinal direction (x), wherein the gas shielding apparatus (1) is configured to discharge a shielding gas (S) with a flow rate in the range from 0,5 l/min to 2 I/min per 100 mm² area of the discharge area (11).

4. The gas shielding apparatus according to one of the preceding claims, wherein the shielding gas apparatus (1) is configured such that a flow rate of the cooling medium (C) per unit area of the discharge area (11) is several times higher than a flow rate of the shielding gas (S) per unit area of the discharge area (11).

5. The gas shielding apparatus according to one of the preceding claims, wherein the cooling nozzles (20) are distributed along the body (10) in the internal space (12) in a non-uniform manner.

6. The gas shielding apparatus according to one of the preceding claims, wherein the gas shielding apparatus (1) is configured to be connected to a welding torch (3) at a first end (10a) of the body (10), wherein one of the cooling nozzles (20) comprises a minimal distance (D1) to the welding torch when the welding torch is connected to the first end (10a) of the body (10), said minimal distance (D1) being larger than a distance (D2) between each two neighbouring gas nozzles (20).

7. The gas shielding apparatus according to one of the preceding claims, wherein the gas shielding apparatus (1) is configured to allow adjusting of a flow rate of the cooling medium (C) discharged through each cooling nozzle (20) separately.

8. The gas shielding apparatus according to one of the preceding claims, wherein the gas shielding apparatus (1) is configured to supplying the gas cooling nozzles (20) uniformly with the cooling medium (C).

9. The gas shielding apparatus according to one of the preceding claims, wherein the gas shielding apparatus (1) is configured to vary a gas composition supplied to the respective cooling nozzle (20) individually.

10. The gas shielding apparatus according to one of the preceding claims, wherein the gas shielding apparatus (1) comprises a temperature sensor (30) configured to measure a temperature of a component (2) being covered with the shielding gas (S) and cooling medium (C) by the gas shielding apparatus (1).

11. The gas shielding apparatus according to claim 10, wherein the temperature sensor (30) comprises one of: a thermocouple, a pyrometer, a thermal camera.

12. The gas shielding apparatus according to claim 10 or 11, wherein the gas shielding apparatus (1) further comprises a control unit (31) configured to control a flow rate of the cooling medium (C) discharged through the respective cooling nozzle (20) and/or a number of active cooling nozzles (20), so that said temperature is below a predefined critical temperature.

13. The gas shielding apparatus according to one of the preceding claims, wherein the gas cooling nozzles (20) are configured to be releasably fastened to the body (10), so that the number of cooling nozzles (20) fastened to the body (10) can be changed and/or so that a cooling nozzle (20) can be replaced by a cooling nozzle (20) having a different specification.

14. The shielding apparatus according to one of the preceding claims, wherein the discharge area (11) is formed by one of: a gas permeable material layer 11(11), a metallic mesh (11), a perforated plate (11), a porous material layer (11).

15. A method for shielding and cooling a component (2) during a welding process, comprising the steps of:
- Connecting a gas shielding apparatus (1) according to one of the preceding claims to a welding torch (3), and
- Discharging a shielding gas (S) through the gas distributors (13) onto the component (2) and discharging a cooling medium (C) through at least one of the cooling nozzles (20) onto the component (2) for cooling the component.
